# EUROPÄISCHE PATENTSCHRIFT

(11) **EP 0 690 190 B1**
(45) Veröffentlichungstag und Bekanntmachung des Hinweises auf die Patenterteilung: **06.08.2003**
(21) Anmeldenummer: 95109156.0
(22) Anmeldetag: 14.06.1995
(51) Int. Cl.: E05B 49/00

(54) **Verfahren zum Betrieb eines Schliesssystems für verschliessbare Gegenstände**
Method for operating a locking system for lockable objects
Procédé d'exploitation d'un système de fermeture pour objets verrouillables

(30) Priorität: 30.06.1994 DE 4422906
(43) Veröffentlichungstag der Anmeldung: 03.01.1996
(73) Patentinhaber: Conti Temic microelectronic GmbH, 90411 Nürnberg (DE); DaimlerChrysler AG, 70567 Stuttgart (DE)
(72) Erfinder: Doerfler, Reiner, Dr., D-90403 Nürnberg (DE); Hettich, Gerhard, Dr., D-90599 Dietenhofen (DE); Robitschko, Peter, D-71069 Sindelfingen (DE)
(74) Vertreter: Kolb, Georg

(56) Entgegenhaltungen:
- EP-A- 0 218 251
- EP-A- 0 440 974
- EP-A- 0 502 234

## Beschreibung

Bei den meisten verschließbaren Gegenständen wird die Zugangsberechtigung (der Schließ-/Öffnungsvorgang) auf mechanischem Wege hergestellt - beispielsweise erfolgt bei Kraftfahrzeugen das Öffnen/Schließen der Fahrertür (Fahrzeugtüren) und die Inbetriebnahme des Kraftfahrzeugs in der Regel mittels eines Fahrzeugschlüssels. Daneben werden neuerdings auch Schließsysteme eingesetzt, bei denen der Öffnungs-/Schließvorgang auf elektronischem Wege mit Hilfe von Datenübertragungsverfahren erfolgt. Ein derartiges Schließsystem besteht beispielsweise aus einem Schlüsselmodul mit einer batteriebetriebenen (HF- oder IR-) Fernbedienung, das das Öffnen/Schließen des verschließbaren Gegenstands durch Übermittlung eines codierten Signals initiiert, und einem am oder im verschließbaren Gegenstand angebrachten Schloßmodul zur Detektion und Überprüfung des vom Schlüsselmodul übermittelten codierten Signals sowie zur Durchführung des Öffnungs-/ Schließvorgangs.
Nachteilig hierbei ist, daß durch versehentliche Betätigung der langreichweitigen Fernbedienung des Schlüsselmoduls der Öffnungs-/Schließvorgang oftmals ungewollt in Gang gesetzt wird.
Die EP-A-0 440 974 beschreibt hierzu ein System, bei dem Signale zum Öffnen der Schließanlage mit geringerer Reichweite als andere Signale gesendet werden.

Der Erfindung liegt die Aufgabe zugrunde, ein einfaches Verfahren zum Betrieb eines Schließsystems anzugeben, bei dem ein ungewollter Öffnungs-/Schließvorgang weitgehend verhindert wird.
Diese Aufgabe wird erfindungsgemäß durch die Merkmale im Kennzeichen des Patentanspruchs 1 gelöst.
Vorteilhafte Weiterbildungen der Erfindung ergeben sich aus den Unteransprüchen.

Gemäß der Erfindung wird bei einer Betätigung der langreichweitigen Fernbedienung der vom Benutzer signalisierte Wunsch nach Zugangsberechtigung (Öffnungswille/Schließwille) durch eine bidirektionale Datenübertragung zwischen dem Schlüsselmodul und dem Schloßmodul überprüft und der Öffnungsvorgang/Schließvorgang selbst erst dann realisiert, wenn sich der Benutzer dem verschließbaren Gegenstand genähert hat.
Hierzu wird das Schloßmodul beim Empfang eines Öffnungs-/Schließsignals zunächst in einen Wartemodus versetzt und sendet seinerseits (beispielsweise in bestimmten zeitlichen Abständen und während einer vorgebbaren Zeitspanne) Kontrollsignale aus, die bei einer Annäherung des Benutzers vom Transponder des Schlüsselmoduls empfangen und beantwortet werden; erst nach einer gültigen (verifizierbaren) Antwort des Transponders wird die Steuereinheit des Schloßmoduls durch dieses Steuersignal zur Durchführung des Öffnungs-/Schließvorgangs aktiviert. Da das Transpondersignal nur eine kurze Reichweite besitzt, kann zwar der Öffnungswille/Schließwille mittels der langreichweitigen Fernbedienung signalisiert werden, der Öffnungs-/ Schließvorgang selbst ist aber erst bei entsprechender Annäherung des Benutzers an den verschließbaren Gegenstand möglich; ein Öffnungs-/Schließvorgang wird insbesondere dann nicht durchgeführt, wenn der Transponder (beispielsweise innerhalb einer vorgegebenen Zeitspanne) kein gültiges Kontrollsignal erhält.
Vorteilhafterweise muß der Benutzer das Schlüsselmodul nur zur Signalisierung des Öffnungs-/Schließwillens betätigen (beispielsweise in die Hand nehmen) - dies kann bereits in großer Entfernung vom verschließbaren Gegenstand erfolgen- nicht aber zur Aktivierung des öffnungs-/Schließvorgangs. Da dieser automatisch - falls die übertragenen Signale als gültig verifiziert wurden - bei einer bestimmten Annäherung des Benutzers an den Gegenstand durchgeführt wird, kann ein ungewollter öffnungs-/Schließvorgang infolge versehentlicher Betätigung der Fernbedienung weitgehend unterbunden und damit die Betriebssicherheit des Schließsystems erhöht werden. Über eine optische oder akustische Anzeige kann dem Benutzer ggf. der Schließzustand des Gegenstands angezeigt werden.

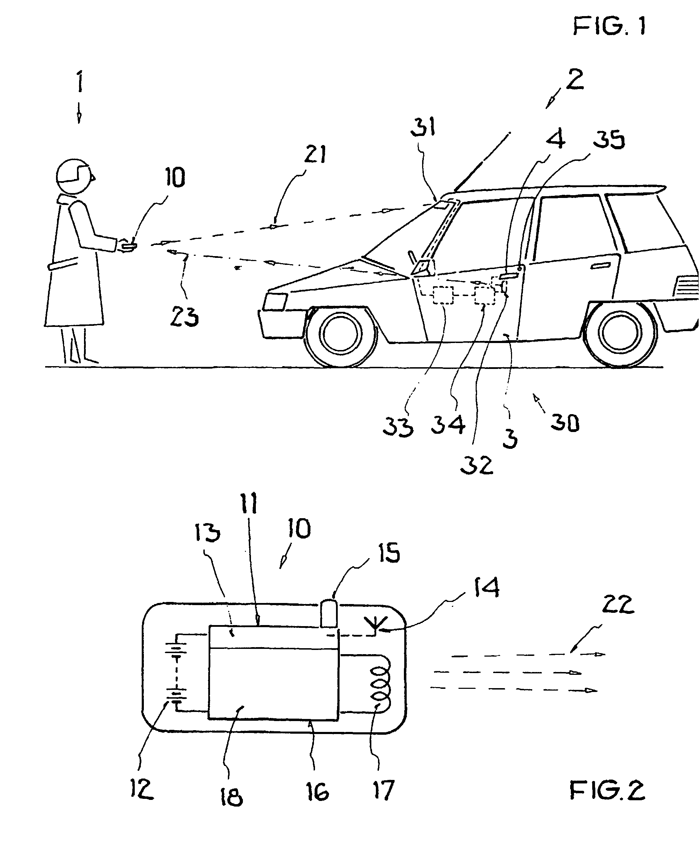

Anhand der Zeichnung wird ein Ausführungsbeispiel erläutert; die Figur 1 zeigt schematisch die Komponenten des Schließsystems bei einem Kraftfahrzeug, die Figur 2 das Schlüsselmodul des Schließsystems.
Gemäß der Figur 2 enthält das Schlüsselmodul 10 eine über den Druckknopf 15 aktivierbare und von der Batterie 12 betriebene HF-Fernbedienung 11 (große Reichweite, ca. 10 m) mit einer von der Elektronikeinheit 13 angesteuerten HF-Antenne 14 sowie einen Transponder 16 (kurze Reichweite, wenige cm) mit der Induktions-Spule 17 und der Elektronikeinheit 18; die Elektronikeinheiten 13 und 18 von Fernbedienung 11 und Transponder 16 können als separate oder gemeinsame Einheit realisiert werden. Das Schlüsselmodul 10 kann als relativ kleine Baueinheit ausgebildet werden und besitzt beispielsweise die Maße 25 mm × 35 mm.
Gemäß der Figur 1 wird vom Benutzer 1 der Zugang zum Kraftfahrzeug 2 über die Entriegelung oder Verriegelung der Fahrertüre 3 des Kraftfahrzeugs 2 hergestellt; dies kann durch Betätigung der langreichweitigen HF-Fernbedienung 11 des Schlüsselmoduls 10 (Drücken des Druckknopfs 15) in relativ großer Entfernung vom Kraftfahrzeug 2 angefordert werden. Das daraufhin ausgesandte codierte HF-Signal 21 wird an eine im Fahrzeuginneren (beispielsweise an der Fahrzeugdecke) angebrachte Empfangseinheit 31 des Schloßmoduls 30 übermittelt, das weiterhin eine Sendeeinheit 32, eine Auswerteeinheit 33 und eine Steuereinheit 34 aufweist; die Auswerteeinheit 33 kann beispielsweise in der Steuereinheit 34 oder der Empfangseinheit 31 integriert sein. Durch die Auswerteeinheit 33 wird das eintreffende HF-Signal 21 verifiziert; bei ordnungsgemäß übertragenem Code wird das Schloßmodul 30 in einen Wartemodus versetzt und sendet seinerseits über die (beispielsweise in der Nähe des Türgriffs 4 der Fahrertüre 3 angeordnete) Sendeeinheit 32 in Abständen von z. B. 0,3 s Kontrollsignale 23 mit der Frequenz von z. B. 125 kHz aus. Diese Kontrollsignale 23 werden von der Induktions-Spule 17 des Transponders 16 des Schlüsselmoduls 10 bei einer entsprechenden Annäherung des Benutzers 1 an das Fahrzeug 2 empfangen (beispielsweise beträgt die maximale Reichweite 70 cm) und von der Elektronikeinheit 18 des Transponders 16 ausgewertet. Bei einem ordnungsgemäßen Empfang eines Kontrollsignals 23 sendet das Schlüsselmodul 10 über die Induktions-Spule 17 des Transponders 16 ein Steuersignal 22 an das Schloßmodul 30, über das die Steuereinheit 34 aktiviert wird, die ein Öffnen/Verschließen der Fahrertüre 3 vornimmt. Weiterhin ist eine optische Anzeigevorrichtung 35 in der Nähe des Türgriffs 4 der Fahrertüre 3 vorgesehen, über die der Schließzustand des Kraftfahrzeugs 2 angezeigt wird (denkbar ist es auch, den Schließzustand beispielsweise über einen akustischen Piepston am Armaturenbrett des Kraftfahrzeuges 2 anzuzeigen).

## Patentansprüche

1. Verfahren zum Betrieb eines Schließsystems für verschließbare Gegenstände (2), das
- ein Schlüsselmodul (10) aus Fernbedienung (11) und Transponder (16) zum Übertragen und Empfangen von codierten Signalen (21, 22, 23) und
- ein im oder am verschließbaren Gegenstand (2) angebrachtes Schloßmodul (30) aus einer Empfangseinheit (31) zur Detektion von codierten Signalen (21, 22), einer Auswerteeinheit (33) zur Verifizierung der codierten Signale (21, 22) und einer Steuereinheit (34) zur Durchführung des Öffnungsvorgangs bzw. Schließvorgangs des verschließbaren Gegenstands (2) aufweist,
**gekennzeichnet dadurch, daß** vor dem öffnen oder Verschließen des Gegenstands (2) eine bidirektionale Datenübertragung zwischen Schlüsselmodul (10) und Schloßmodul (30) vorgenommen wird, indem
- das Schloßmodul (30) beim Empfang eines vom Schlüsselmodul (10) abgegebenen Öffnungssignals bzw. Schließsignals (21) in einen Wartemodus übergeht und durch eine Sendeeinheit (32) Kontrollsignale (23) aussendet,
- bei einer Annäherung des Benutzers (1) an den verschließbaren Gegenstand (2) eines der Kontrollsignale (23) vom Transponder (16) des Schlüsselmoduls (10) empfangen und ausgewertet wird,
- vom Transponder (16) ein Steuersignal (22) an das Schloßmodul (30) übertragen wird, durch das die Steuereinheit (34) aktiviert wird.

2. Verfahren nach Anspruch 1, **dadurch gekennzeichnet, daß** die Kontrollsignale (23) von der Sendeeinheit (32) des Schloßmoduls (30) in bestimmten zeitlichen Abständen abgestrahlt werden.

3. Verfahren nach Anspruch 1 oder 2, **dadurch gekennzeichnet, daß** die Kontrollsignale (23) von der Sendeeinheit (32) des Schloßmoduls (30) innerhalb einer vorgebbaren Zeitspanne abgestrahlt werden.

4. Verfahren nach einem der Ansprüche 1 bis 3, **dadurch gekennzeichnet, daß** die Kontrollsignale (23) im HF-Bereich von einer als Spule ausgebildeten Sendeeinheit (32) abgestrahlt werden.

5. Verfahren nach einem der Ansprüche 1 bis 4, **dadurch gekennzeichnet, daß** der Schließzustand des verschließbaren Gegenstands (2) über eine Anzeigevorrichtung (35) optisch oder akustisch angezeigt wird.

6. Verfahren nach einem der Ansprüche 1 bis 5, **dadurch gekennzeichnet, daß** vom Sendemodul (10) entweder codierte Signale (21) durch die Fernbedienung (11) mittels einer über einen Druckknopf (15) aktivierbaren HF-Antenne (14) oder codierte Signale (22) durch den Transponder (16) mittels einer Induktions-Spule (17) übertragen werden.

7. Verfahren nach Anspruch 6, **dadurch gekennzeichnet, daß** die von der Fernbedienung (11) übertragenen codierten Signale (21) im HF-Bereich abgestrahlt werden.

8. Verfahren nach einem der Ansprüche 1 bis 7 zur Herstellung der Zugangsberechtigung für die Türe(n) (3) eines Kraftfahrzeugs (2).

## Claims

1. A process for the operating of a locking system for lockable objects (2) which has
- a key module (10) consisting of a remote control device (11) and a transponder (16) for sending and receiving coded signals (21, 22, 23) and
- a lock module (30) fitted in or on the lockable object (20) consisting of a receiver unit (31) for detecting coded signals (21, 22), an evaluation unit (33) for verifying the coded signals (21, 22) and a control unit (34) for effect the locking/unlocking process in the lockable object (2),
**characterised in that**
a bi-directional data transfer takes place between the key module (10) and the lock module (30) prior to the locking or unlocking of the object (2) **in that**
- on receipt of a locking or unlocking signal (21) from the key module (10), the lock module (30) switches to waiting mode and emits control signals (23) from a transmitter unit (32),
- as the user (1) approaches the lockable object (2), one of the control signals (23) is received and evaluated by the transponder (16) in the key module (10),
- the transponder (16) sends a control signal (22) to the lock module (30) which activates the control unit (34).

2. A process in accordance with claim 1,
**characterised in that**
the control signals (23) are emitted by the transmitter unit (32) in the lock module (30) at given time intervals.

3. A process in accordance with claim 1 or 2,
**characterised in that**
the control signals (23) are emitted by the transmitter unit (32) in the lock module (30) within a predeterminable period of time.

4. A process in accordance with one of claims 1 to 3,
**characterised in that**
the control signals (23) are emitted in the HF range by a transmitter unit (32) designed as a coil.

5. A process in accordance with one of claims 1 to 4,
**characterised in that**
the locking status of the lockable object (2) is displayed optically or acoustically by means of a display device (35).

6. A process in accordance with one of claims 1 to 5,
**characterised in that**
the transmitter module (10) sends either coded signals (21) from the remote control device (11) by means of an HF aerial activated by a press button (15) or coded signals (22) from the transponder (16) by means of an induction coil (17).

7. A process in accordance with claim 6,
**characterised in that**
the coded signals (21) sent by the remote control device (11) are emitted in the HF range.

8. A process in accordance with one of claims 1 to 7 to achieve access authorisation for the door(s) (3) of a motor vehicle (2).

## Revendications

1. Procédé de fonctionnement d'un système de fermeture pour des objets (2) verrouillables, lequel système de fermeture comprend :
- un module de clé (10) se composant d'une télécommande (11) et d'un transpondeur (16) pour la transmission et la réception de signaux codés (21, 22, 23), et
- un module de serrure (30) monté dans ou sur l'objet (2) verrouillable, se composant d'une unité de réception (31) pour la détection de signaux codés (21, 22), d'une unité d'analyse (33) pour la vérification des signaux codés (21, 22) et d'une unité de commande (34) pour l'exécution du processus d'ouverture ou du processus de fermeture de l'objet (2) verrouillable,
**caractérisé en ce que**, avant l'ouverture ou le verrouillage de l'objet (2), une transmission bidirectionnelle de données est effectuée entre le module de clé (10) et le module de serrure (30), de sorte que
- lors de la réception d'un signal d'ouverture ou d'un signal de fermeture (21) fourni par le module de clé (10), le module de serrure (30) passe en mode d'attente et envoie, par une unité d'émission (32), des signaux de contrôle (23),
- lors d'une approche de l'utilisateur (1), de l'objet (2) verrouillable, un des signaux de contrôle (23) est reçu et analysé par le transpondeur (16) du module de clé (10),
- un signal de commande (22) est transmis, par le transpondeur (16), au module de serrure (30) par lequel l'unité de commande (34) est activée.

2. Procédé selon la revendication 1, **caractérisé en ce que** les signaux de contrôle (23) sont émis par l'unité d'émission (32) du module de serrure (30), suivant des intervalles de temps déterminés.

3. Procédé selon la revendication 1 ou 2, **caractérisé en ce que** les signaux de contrôle (23) sont émis par l'unité d'émission (32) du module de serrure (30), dans les limites d'un laps de temps prédéterminé.

4. Procédé selon l'une des revendications 1 à 3, **caractérisé en ce que** les signaux de contrôle (23) sont émis, dans la plage des hautes fréquences (HF), par une unité d'émission (32) configurée comme une bobine.

5. Procédé selon l'une des revendications 1 à 4, **caractérisé en ce que** l'état de fermeture de l'objet (2) verrouillable est indiqué optiquement par un dispositif de visualisation (35) ou indiqué acoustiquement.

6. Procédé selon l'une des revendications 1 à 5, **caractérisé en ce que**, depuis le module d'émission (10), soit des signaux codés (21) sont transmis par la télécommande (11), au moyen d'une antenne HF (14) pouvant être activée par un bouton-poussoir (15), soit des signaux codés (22) transmis par le transpondeur (16), au moyen d'une bobine d'induction (17).

7. Procédé selon la revendication 6, **caractérisé en ce que** les signaux codés (21), transmis par la télécommande (11), sont émis dans la plage des hautes fréquences (HF).

8. Procédé selon l'une des revendications 1 à 7, servant à l'établissement de l'authentification d'accès pour la ou les portes (3) d'un véhicule automobile (2).
